# EUROPÄISCHE PATENTANMELDUNG

(11) **EP 1 621 761 A2**
(43) Veröffentlichungstag der Anmeldung: **01.02.2006**
(21) Anmeldenummer: 05015488.9
(22) Anmeldetag: 16.07.2005
(51) Int. Cl.: F02M 55/02, F16L 41/02, F16L 41/00

(54) **Faserumwickelter Behälter**

(30) Priorität: 29.07.2004 DE 102004036877
(71) Anmelder: DEUTZ Aktiengesellschaft, 51063 Köln (DE)
(72) Erfinder: Kamleitner, Ewald, 88048 Friedrichshafen (DE); Medenbach, Marcus, 68167 Mannheim (DE)

(57) **Zusammenfassung**

Die Erfindung betrifft einen mediumführenden, geschlossenen Behälter aus einem metallischen Werkstoff, der zumindest einen Einlass und einen Auslass aufweist, die als Anschlussstutzen (2) ausgebildet sind.
Erfindungsgemäß wird ein derartiger als Rail (1) einer Einspritzanlage ausgebildeter Behälter bezüglich Steifigkeit und Gewicht zu optimiert. Dies wird dadurch erreicht, dass der Behälter von hochfesten Fasern (7) umgeben ist. Die Fasern (7) werden in Form eines Korsetts um den Behälter einschließlich zumindest dem Verschneidungsbereich (3) der Anschlussstutzen (2) zu dem Behälter angelegt. Mit diesem Korsett kann bei einer dünnwandigeren Ausbildung metallischen Teils eine deutliche Erhöhung der Steifigkeit des Behälters, insbesondere im Verschneidungsbereich (3) zu den Anschlussstutzen (2) erreicht werden.

## Beschreibung

Die Erfindung betrifft einen mediumführenden, geschlossenen Behälter aus einem metallischen Werkstoff, der zumindest einen Einlass und einen Auslass aufweist, die als Anschlussstutzen ausgebildet sind.

Ein derartiger Behälter ist aus der DE 100 61 873 A1 bekannt. Es handelt sich bei diesem Behälter um ein Kraftstoffspeicherrohr (Rail eines Common-Rail-Systems) für eine mehrzylindrige Brennkraftmaschine, das variabel aus Modulen zusammengesetzt ist. Diese Module sind massiv gefertigt und werden beispielsweise durch Schweißen miteinander verbunden. Insbesondere bei vielzylindrigen Großmotoren erreicht ein solches Rail, das sich zumindest angenähert über die gesamte Länge der Brennkraftmaschine erstreckt, beachtliche Dimensionen und sowohl das Speicherrohr als auch die Anschlussstutzen müssen zur Gewährleistung einer geforderten Festigkeit und Steifigkeit dimensioniert sein. Dazu sind bei diesem Rail im Bereich der Anschlussstutzen zusätzliche Materialanhäufungen vorgesehen.

Der Erfindung liegt die Aufgabe zugrunde, einen gattungsgemäßen Behälter bezüglich Festigkeit, Steifigkeit und Gewicht zu optimieren.

Diese Aufgabe wird dadurch gelöst, dass der Behälter von hochfesten Fasern umgeben ist. Die Fasern werden in Form eines Korsetts um den Behälter einschließlich zumindest dem Verschneidungsbereich der Anschlussstutzen zu dem Behälter angelegt. Mit diesem Korsett kann bei einer dünnwandigeren Ausbildung des metallischen Teils eine deutliche Erhöhung der Festigkeit und Steifigkeit des Behälters, insbesondere im Verschneidungsbereich zu den Anschlussstutzen erreicht werden. Dabei kann das Gewicht eines solchen Behälters gegenüber einem herkömmlich gefertigten Behälter mit ähnlichen mechanischen Eigenschaften deutlich reduziert werden. Dies ist auch betreffend die Befestigungstechnologie die Handhabung des Behälters bei der Montage vorteilhaft.

Die Anschlussstutzen können als ein separates Bauteil in Form von Abzweigrohren ausgebildet sein, die den Behälter durchdringen und dicht mit dem Behälter verbunden sind. Dabei weist jedes Abzweigrohr in dem den Behälter durchdringenden Bereich zumindest eine Öffnung auf. Diese Ausbildung hat den Vorteil, dass der Behälter ein glattes Halbzeug (Rohr) sein kann, das beispielsweise durch Ziehen einfach zu fertigen ist. Die benötigte Anzahl von Abzweigrohren wird in entsprechende Bohrungen des Halbzeuges eingesetzt und dicht mit dem Rohr verbunden. Die Besonderheit dieser Ausbildung liegt darin, dass das Abzweigrohr den Behälter durchdringt und somit wesentlich geringere Festigkeitsanforderungen an die Verbindung des Abzweigrohres mit dem Behälter gestellt werden, da keine von einer Anbringung eines Anschlussstutzens hervorgerufen Zug- beziehungsweise Druckkräfte auf die Verbindung einwirken. Zusammen mit dem Korsett aus Fasern werden die Festigkeit und die Steifigkeit bei geringem Gewicht weiter optimiert. Das Abzweigrohr ist vorteilhaft quer zu dem Behälter angeordnet und der Durchmesser des Abzweigrohres ist kleiner als der des Behälters. Dadurch sind die Bohrungen als Querbohrungen problemlos zu fertigen und der Innen- beziehungsweise Außendurchmesser des Abzweigrohres sind auf den erforderlichen Strömungsquerschnitt beziehungsweise die Festigkeitsanforderungen abstimmbar. Das Abzweigrohr weist eine Vielzahl von Öffnungen in Form von vorzugsweise Bohrungen mit kleinen Durchmessern auf. Diese Ausbildung hat den Vorteil, dass eine Dämpfung der in dem Behälter herrschenden Schwingungszustände bei dem Übertritt des Mediums in die Abzweigrohre erfolgt. Die Verbindung des Abzweigrohres mit dem Behälter ist durch Reibschweißtechnik, konventionelle Elektronenstrahleinschweißtechnik, geometrische Überdeckung (Presssitz) oder eine andere Verbindungstechnik hergestellt. Die geometrische Überdeckung ist durch eine geeignete Wahl der Werkstoffe, insbesondere die Abstimmung in Bezug auf den Elastizitätsmodul, so eingestellt, dass sich bei Aufbringung des Betriebsdruckes im Inneren des Behälters eine Pressungsverstärkung einstellt. Hierbei beträgt wiederum in weiterer Ausgestaltung der Elastizitätsmodul des Abzweigrohres vorzugsweise 50 % der des Behälters. Dieses Verhältnis ergibt sich beispielsweise bei einer Fertigung des Abzweigrohres aus Titan und des Behälters aus Stahl.

In Weiterbildung der Erfindung sind die Fasern Karbonfasern oder Aramidfasern. Diese weisen bei äußerst geringem Gewicht hohe Festigkeitswerte auf und sind problemlos zu verarbeiten.

In weiterer Ausgestaltung der Erfindung wird um den Behälter abschnittsweise ein vorgefertigtes Faser-Halbzeug (Strumpfschlauch) aufgelegt. Die so auf den Behälter aufgelegten Faser-Halbzeuge werden anschließend mittels eines speziellen Wickelverfahrens unter Einhaltung einer gewissen Zugspannung der aufgewickelten Fasern umwickelt, wobei insbesondere in den Abzweigungsbereichen zu den Anschlussstutzen beziehungsweise zu den Abzweigrohren eine vorher im metallischen Bereich ausgesparte Geometrie aufgefüllt und in geeigneter Richtung zur Verdichtung (zur Erzeugung einer Druckeigenspannung im inneren Bereich des Metalls) der darunter liegenden Metallpartien beaufschlagt wird.

In Weiterbildung der Erfindung sind die Fasern insgesamt so um den Behälter gewickelt, dass diese eine Druckeigenspannung in dem metallischen Werkstoff des Behälters aufbauen. Besonders vorteilhaft ist hierbei die Tatsache, dass die angegebenen Fasertypen deutlich höhere E-Module als metallische Werkstoffe aufweisen. Dadurch ergibt sich der Vorteil, dass bei zunehmenden Innendruck die von der Dauerfestigkeit her kritischen Innenpartien des Behälters von den umgebenden Fasern überproportional gestützt werden.

In Weiterbildung der Erfindung sind die umwickelten Lagen der Fasern mittels eines geeigneten Werkstoff infiltriert. Dieser Werkstoff wird in seiner flüssigen Phase eingebracht und gegebenenfalls durch Zusätze in seine feste Phase überführt. Beispiele für solche Werkstoffe sind Epoxidharze, niedrigschmelzende Metalle oder ähnliche.

Der Behälter ist in weiterer Ausgestaltung der Erfindung ein Rail für das Einspritzsystem in einer Brennkraftmaschine und betreffend des metallischen Teils aus Stahl, Guss, Titan oder einer Kombination davon hergestellt. Dabei entspricht die Anzahl der Anschlussstutzen beziehungsweise der Abzweigrohre bevorzugt der Anzahl der mit Kraftstoff zu beschickenden Einspritzventile. Entsprechend werden die Einspritzleitungen an den Anschlussstutzen (der Abzweigrohre) festgeschraubt. Das jeweils zweite Ende bzw. der zweite Anschlussstutzen des Abzweigrohres wird zum Anschluss der Zufuhrleitung für die Einführung des Kraftstoffs in das Rail und/oder den Anschluss von Messvorrichtungen, Sicherheitseinrichtungen oder sonstigen Steuervorrichtungen verwendet. Nicht benötigte Anschlussstutzen des Abzweigrohres werden mit passenden Stopfen verschlossen. Die Zufuhrleitung kann im Rahmen der Erfindung aber auch an ein zusätzliches eigenes Abzweigrohr angeschlossen sein.

Abgesehen von dem Gewichtsvorteil besteht ein weiteres vorteilhaftes Merkmal darin, dass bei Auftreten von feinen Rissen in der metallischen Struktur des Rails, die zu einem scharfen Flüssigkeitsstrahl führen, die Faserlagen einen sehr guten Widerstand gegenüber dem Austreten des Flüssigkeitsstrahl darstellen.

Weitere vorteilhafte Ausgestaltungen sind der Zeichnungsbeschreibung zu entnehmen, in der ein in den Figuren dargestelltes Ausführungsbeispiel näher beschrieben ist.

Es zeigen:
- Fig. 1: das von hochfesten Fasern umgebene Rail einer Brennkraftmaschine und

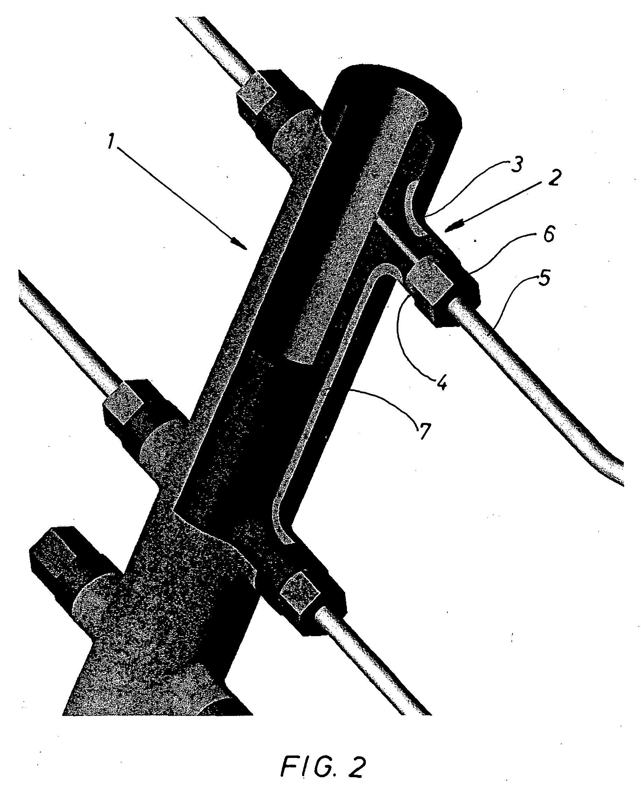

- Fig. 2: einen Ausschnittsdarstellung des Rails gemäß Fig. 1 mit montierten Hochdruckleitungen.

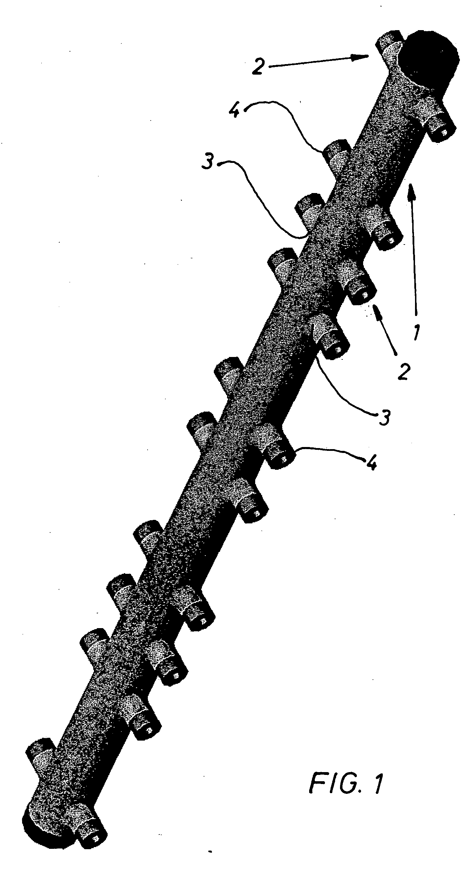

Der geschlossene mediumführende Behälter gemäß Fig. 1 ist das Rail für das Kraftstoffsystem einer selbstzündenden Brennkraftmaschine, wobei in dem Rail 1 Kraftstoff mit einem Druck von bis zu 2000 bar gespeichert wird. Das Rail 1 erstreckt sich zumindest angenähert über die gesamte Zylinderreihe einer mehrzylindrigen Brennkraftmaschine und weist eine Anzahl von Anschlussstutzen 2 auf. An die Anschlussstutzen 2 sind Hochdruckleitungen 5 anschraubbar, über die einerseits zusammen mit einer Hochdruckpumpe die Kraftstoffversorgung des Rails 1 und andererseits zusammen mit magnetventilgesteuerten Einspritzventilen in dem bzw. den Zylinderköpfen der Brennkraftmaschine die Kraftstoffzumessung in die Brennräume erfolgt. Das Rail ist beispielsweise aus Kugelgraphit gegossen und über seine gesamte Länge mit hochfesten Fasern 7 , insbesondere Karbonfasern oder Aramidfasern, umwickelt. Dabei erfolgt die Umwicklung, gegebenenfalls unter Verwendung von vorgefertigten Faser-Halbzeugen, so, dass in dem metallischen Bereich des Rails 1 eine Druckeigenspannung aufgebaut wird. Insbesondere der Verzweigungsbereich 3 des Rails 1 zu den einzelnen Anschlussstutzen 2 ist dabei bis zu Anschlussgewinden 4 für die Hochdruckleitungen 5 derartig umwickelt. An dem Anschlussgewinde 5 sind die Hochdruckleitungen 5 mit entsprechenden Hohlschrauben 6 befestigt.

### Bezugszeichenliste

- 1: Rail
- 2: Anschlussstutzen
- 3: Verzweigungsbereich
- 4: Anschlussgewinde
- 5: Hochdruckleitung
- 6: Hohlschraube
- 7: Fasern

## Patentansprüche

1. Mediumsführender, geschlossener Behälter aus einem metallischen Werkstoff, der zumindest einen Einlass und einen Auslass aufweist, die als Anschlussstutzen ausgebildet sind,
***dadurch gekennzeichnet,* dass** der Behälter zumindest im Verzweigungsbereich (3) zu den Anschlussstutzen (2) von hochfesten Fasern (7) umgeben ist.

2. Behälter nach Anspruch 1,
***dadurch gekennzeichnet,* dass** der E-Modul der Fasern (7) höher, insbesondere um ein Vielfaches höher als der des metallischen Werkstoffs ist.

3. Behälter nach Anspruch 1 oder 2,
***dadurch gekennzeichnet,* dass** die Fasern (7) Karbonfasern sind.

4. Behälter nach Anspruch 1 oder 2,
***dadurch gekennzeichnet,* dass** die Fasern (7) Aramidfasern sind.

5. Behälter nach einem der vorherigen Ansprüche,
***dadurch gekennzeichnet,* dass** um den Behälter abschnittsweise ein vorgefertigtes Faser-Halbzeug aufgelegt ist.

6. Behälter nach einem der vorherigen Ansprüche,
***dadurch gekennzeichnet,* dass** die Fasern (7) um den Behälter und/oder das Faser-Halbzeug gewickelt sind.

7. Behälter nach Anspruch 6,
***dadurch gekennzeichnet,* dass** die Fasern (7) eine Druckeigenspannung in dem metallischen Werkstoff aufbauend gewickelt sind.

8. Behälter nach einem der vorherigen Ansprüche,
***dadurch gekennzeichnet,* dass** die umwickelten Lagen der Fasern (7) mittels geeignetem Werkstoff infiltriert sind.

9. Behälter nach einem der vorherigen Ansprüche,
***dadurch gekennzeichnet,* dass** der metallische Werkstoff Stahl, Guss, Titan oder eine Kombination davon ist.

10. Behälter nach einem der vorherigen Ansprüche,
***dadurch gekennzeichnet,* dass** der Behälter ein Rail (1) für das Einspritzsystem einer Brennkraftmaschine ist.
